# EUROPEAN PATENT APPLICATION

(11) **EP 3 486 802 A1**
(43) Date of publication of application: **22.05.2019**
(21) Application number: 17826840.5
(22) Date of filing: 02.06.2017
(51) Int. Cl.: G06F 16/27

(54) **GLOBAL TRANSACTION IDENTIFIER (GTID) SYNCHRONIZATION METHOD, APPARATUS AND SYSTEM, AND STORAGE MEDIUM**

(30) Priority: 13.07.2016 CN 201610552734
(71) Applicant: ZTE Corporation, Shenzhen, Guangdong 518057 (CN)
(72) Inventor: XU, Wenfeng, Shenzhen, Guangdong 518057 (CN); SONG, Tao, Shenzhen, Guangdong 518057 (CN); DING, Yan, Shenzhen, Guangdong 518057 (CN); JIA, Xinhua, Shenzhen, Guangdong 518057 (CN)
(74) Representative: Brevalex
(86) International application number: PCT/CN2017/087101
(87) International publication number: WO 2018/010501

(57) **Abstract**

The present invention provides a global transaction identification (GTID) synchronization method, apparatus and system, and a storage medium. The method comprises: an active GTM receives two or more GTID processing messages, wherein the GTID processing message comprises a GTID application message and/or a GTID release message, the GTID application message is used for requesting to generate a first GTID, and the GTID release message is used for requesting to delete a second GTID; the active GTM performs batch processing on GTIDs stored in the active GTM according to the two or more GTID processing messages, and generates an incremental document for describing the batch processing; the active GTM synchronizes the content of the incremental document to a standby GTM, wherein the content of the incremental document is used for instructing the standby GTM to perform batch processing on GTIDs which are stored in the standby GTM and correspond to those of the active GTM.

## Description

### CROSS-REFERENCE TO RELATED APPLICATIONS

The present application is based upon and claims benefit of Chinese Patent Application No. 201610552734.X, filed on July 13, 2016, the contents of which are hereby incorporated by reference in its entirety.

### TECHNICAL FIELD

The present invention relates to the field of communications, and in particular to a method, device and system for synchronizing a global transaction identification (GTID) and a computer storage medium.

### BACKGROUND

Data of a same table in a distributed database system is usually distributed in different related databases (a cluster) according to certain rules. If transaction operations are involved, it is necessary to ensure that the data of all databases are consistent within the same transaction; if the data in a data base needs to be rolled back, the data in all other databases also needs to be rolled back. In order to record such transaction capabilities, a capability of recording a global transaction identification (GTID) is required.

In the related art, the commonly solution is to store the transaction data in the database, and ensure the accuracy of the data through the storage and backup functions of the database. However, the problems caused by the above solution is that the reliable storage of the database may record files such as memory files and redo logs, the performance is low and the high concurrency capability of transactions in distributed database systems cannot be met. In addition, if a simple file is used for storing, the interrupt period of the system is long when the machine or disk is damaged, and the disk is easily necrotic because the frequent accessing of a large number of read and write requests. Therefore, the method for recording the GTID in the related art may cause problems that the disk is easily damaged and the interruption period of the system is long, and therefore the normal operation of the service is affected.

In view of the above problems existing in the related art, an effective solution has not yet been proposed.

### SUMMARY

The embodiments of the invention provide a method, device and system for synchronizing a global transaction identification (GTID) and a computer storage medium, so as to solve the problems existing in the related art that the disk is easily damaged, the interruption period of the system is long, and the normal operation of the service is affected.

According to an embodiment of the invention, a method for synchronizing a global transaction identification (GTID) is provided. The method includes: a primary global transaction manager (GTM) receives two or more GTID processing messages, herein a GTID processing message comprises at least one of a GTID application message or a GTID release message, the GTID application message is used for requesting to generate a first GTID, and the GTID release message is used for requesting to delete a second GTID; the primary GTM performs batch processing on GTIDs stored in the primary GTM according to the two or more GTID processing messages and generates an incremental file for describing the batch processing; and the primary GTM synchronizes content of the incremental file to a standby GTM, herein the content of the incremental file is used to instruct the standby GTM to perform the batch processing on GTIDs which are stored in the standby GTM and corresponding to the GTIDs in the primary GTM.

In an embodiment of the present invention, the primary GTM generates the incremental file for describing the batch processing may include: the primary GTM generates the incremental file in batches in a sequential write manner in an order of performing the batch processing on the GTIDs stored in the primary GTM.

In an embodiment of the present invention, the method may further include: after the primary GTM synchronizes the content of the incremental file to the standby GTM, the primary GTM determines whether an incremental synchronization response message returned by the standby GTM after the standby GTM performs the batch processing is received within a predetermined time. When the primary GTM determines that the incremental synchronization response message is received within a predetermined time, the primary GTM returns, according to the incremental synchronization response message, a processing response to a transmitting end for transmitting the GTID processing message; and/or when the primary GTM determines that the incremental synchronization response message is not received within a predetermined time, the primary GTM synchronizes all the GTIDs, which are processed by the primary GTM in batches and then stored in the primary GTM, to the standby GTM.

In an embodiment of the present invention, the method may further include: after the primary GTM synchronizes the content of the incremental file to the standby GTM, the primary GTM stores all GTIDs, which are processed by the primary GTM in batches and then stored in the primary GTM, into a first disk; and the primary GTM deletes the incremental file.

In an embodiment of the present invention, the method may further include: the primary GTM reads a first full file and a first latest incremental file which are stored in the primary GTM after the primary GTM is restarted due to an exception. Herein the first full file is used for describing all GTIDs stored in the primary GTM at a predetermined moment, and the first latest incremental file is used for describing change information of the GTIDs stored in the primary GTM. When the primary GTM determines that a time at which the first latest incremental file is generated is later than a time at which the first full file is generated, the primary GTM recovers and stores, according to the first full file and the first latest incremental file, GTIDs which are actually stored by the primary GTM before the primary GTM restarts ; and/or when the primary GTM determines that the time at which the first latest incremental file is generated is earlier than the time at which the first full file is generated, the primary GTM recovers and stores, according to only the first full file, GTIDs which are actually stored by the primary GTM before the primary GTM restarts.

In an embodiment of the present invention, the method may further include: when restart due to an exception occurs to the primary GTM and the standby GTM at the same time, after the primary GTM recovers and stores the GTIDs which are actually stored by the primary GTM before the primary GTM restarts, the primary GTM synchronizes the recovered and stored GTIDs to the standby GTM.

In an embodiment of the present invention, a method for synchronizing a global transaction identification (GTID) is provided. The method includes: a standby global transaction manager (GTM) receives content of an incremental file synchronized by a primary GTM, herein the content of the incremental file is used for describing batch processing performed on GTIDs stored in the primary GTM by the primary GTM according to two or more received GTID processing messages, herein a GTID processing message includes at least one of a GTID application message or a GTID release message, the GTID application message is used for requesting the primary GTM to generate a first GTID, and the GTID release message is used for requesting the primary GTM to delete a second GTID, and the standby GTM performs the batch processing on GTIDs which are stored in the standby GTM and corresponding to the GTIDs in the primary GTM according to the content of the incremental file.

In an embodiment of the present invention, the method may further include: after the standby GTM performs the batch processing on the GTIDs which are stored in the standby GTM and corresponding to the GTIDs in the primary GTM according to the content of the incremental file, the standby GTM returns an incremental synchronization response message to the primary GTM within a predetermined time when the standby GTM determines that the batch processing is successful.

In an embodiment of the present invention, the method may further include: after the primary GTM performs the batch processing on the GTIDs which are stored in the standby GTM and corresponding to the GTIDs in the primary GTM according to the content of the incremental file, the standby GTM receives all GTIDs, which are stored in the primary GTM after the batch processing is performed, from the primary GTM; and the standby GTM updates GTIDs stored in the standby GTM according to the GTIDs received from the primary GTM.

In an embodiment of the present invention, the method further includes: after the standby GTM performing the batch processing on the GTIDs which are stored in the standby GTM and corresponding to the GTIDs in the primary GTM according to the content of the incremental file, the standby GTM stores all the GTIDs, which are processed in batches and then stored in the standby GTM, into a second disk; and deletes the incremental file.

In an embodiment of the present invention, the method further includes: the standby GTM reads a second full file and a second latest incremental file which are stored in the standby GTM after the standby GTM is restarted due to an exception, herein the second full file is used for describing all GTIDs stored in the standby GTM at a predetermined moment, and the second latest incremental file is used for describing change information of the GTIDs stored in the standby GTM. When the standby GTM determines that a time at which the second latest incremental file is generated is later than a time at which the second full file is generated, the standby GTM recovers and stores, according to the second full file and the second latest incremental file, GTIDs which are actually stored by the standby GTM before the standby GTM restarts; and/or when the standby GTM determines that the time at which the second latest incremental file is generated is earlier than the time at which the second full file is generated, the standby GTM recovers and stores, according to only the second full file, GTIDs which are actually stored by the standby GTM before the standby GTM restarts.

In an embodiment of the present invention, the method further includes: when restart due to an exception occurs to the primary GTM and the standby GTM at the same time, after the standby GTM recovers and stores the GTIDs which are actually stored by the standby GTM before the standby GTM restarts, the standby GTM receives the recovered and stored GTIDs from the primary GTM; the standby GTM compares the recovered and stored GTIDs received from the primary GTM and the recovered and stored GTIDs in the standby GTM; and the standby GTM updates the recovered and stored GTIDs in the standby GTM using the recovered and stored GTIDs received from the primary GTM when the standby GTM determines that the recovered and stored GTIDs received from the primary GTM is the latest stored GTIDs according to the comparison result.

According to another embodiment of the present invention, a device for synchronizing a global transaction identification (GTID) is provided. The device is applied to a primary global transaction manager (GTM). The device includes a first receiving module configured to receive two or more GTID processing messages, herein a GTID processing message comprises at least one of a GTID application message or a GTID release message, the GTID application message is used for requesting to generate a first GTID, and the GTID release message is used for requesting to delete a second GTID; a first processing module configured to perform batch processing on GTIDs stored in a primary GTM according to the two or more GTID processing messages and generate an incremental file for describing the batch processing; and a synchronization module configured to synchronize content of the incremental file to a standby GTM, herein the content of the incremental file is used to instruct the standby GTM to perform the batch processing on GTIDs which are stored in the standby GTM and corresponding to the GTIDs in the primary GTM.

In an embodiment of the present invention, the device further includes a determining module and a processing module. The determining module is configured to: when the content of the incremental file is synchronized to the standby GTM, determine whether an incremental synchronization response message returned by the standby GTM after the standby GTM performs the batch processing is received within a predetermined time. The processing module configured to return, according to the incremental synchronization response message, a processing response to a transmitting end for transmitting the GTID processing message by the primary GTM when the determination result is that the incremental synchronization response message is received by the primary GTM within a predetermined time; and/or synchronize all the GTIDs, which are stored in the primary GTM after the batch processing is performed, to the standby GTM by the primary GTM when the determination result is that the incremental synchronization response message is not received by the primary GTM within a predetermined time.

In an embodiment of the present invention, the device may further include a first storage module configured to store all GTIDs, which are processed in batches and then stored in the primary GTM, into a first disk after the content of the incremental file is synchronized to the standby GTM; and a deleting module configured to delete the incremental file.

The first receiving module, the first processing module, the synchronization module, the determining module, the processing module, and the first storage module may implement by a central processing unit (CPU) Unit, a Digital Signal Processor (DSP) or a Field-Programmable Gate Array (FPGA) implementation when performing processing.

According to still another embodiment of the present invention, a device for synchronizing a global transaction identification (GTID) is provided. The device is applied to a standby global transaction manager (GTM). The device includes a second receiving module and a second processing module. The second receiving module is configured to receive content of an incremental file synchronized by a primary GTM, herein the content of the incremental file is used for describing batch processing performed on GTIDs stored in the primary GTM by the primary GTM according to two or more GTID processing messages. Herein a GTID processing message comprises at least one of a GTID application message or a GTID release message, the GTID application message is used for request the primary GTM to generate a first GTID, and the GTID release message is used for request the primary GTM to delete a second GTID, The second processing module is configured to perform the batch processing on GTIDs which are stored in the standby GTM and corresponding to the GTIDs in the primary GTM according to the content of the incremental file.

In an embodiment of the present invention, the device may further includes a updating module configured to receive all GTIDs, which are stored in the primary GTM after the batch processing is performed, from the primary GTM after the batch processing is performed on the GTIDs which are stored in the standby GTM and corresponding to the GTIDs in the primary GTM according to the content of the incremental file, and update GTIDs stored in the standby GTM according to the GTIDs received from the primary GTM.

In an embodiment of the present invention, the device further includes a second reading and processing module, which is configured to: read a second full file and a second latest incremental file which are stored in the standby GTM after the standby GTM is restarted due to an exception, herein the second full file is used for describing all GTIDs stored in the standby GTM at a predetermined moment, and the second latest incremental file is used for describing change information of the GTIDs stored in the standby GTM. Wherein the second reading and processing module is further configured to recover and store GTIDs which are actually stored by the standby GTM before the standby GTM restarts according to the second full file and the second latest incremental file when it is determines that the time at which the second latest incremental file is generated is later than the time at which the second full file is generated; and/or recover and store GTIDs which are actually stored by the standby GTM before the standby GTM restarts according to only the second full file when it is determines that the time at which the second latest incremental file is generated is earlier than the time at which the second full file is generated.

The second receiving module, the second processing module, the updating module, and the second reading and processing module may be implemented by using a CPU, a DSP, or an FPGA when performing processing.

According to yet another embodiment of the present invention, a system for synchronizing a global transaction identification (GTID) is also provided. The system includes: a primary global transaction manager (GTM) and a standby GTM, herein the primary GTM is configured to: receive two or more GTID processing messages, herein a GTID processing message includes at least one of a GTID application message or a GTID release message, the GTID application message is used for requesting to generate a first GTID, and the GTID release message is used for requesting to delete a second GTID; perform batch processing on GTIDs stored in a primary GTM according to the two or more GTID processing messages and generate an incremental file for describing the batch processing; and synchronize content of the incremental file to a standby GTM; and the standby GTM is configured to: receive the content of the incremental file synchronized by the primary GTM and perform the batch processing on GTIDs which are stored in the standby GTM and corresponding to the GTIDs in the primary GTM according to the content of the incremental file.

According to yet another embodiment of the present invention, a computer storage medium is provided. The computer storage medium is configured to store program codes for executing the above operations.

Through the embodiment of the present invention, the data storage is performed in a manner of combining the primary and standby GTMs, which ensures that the data storage can be switched to another GTM quickly once a single GTM is abnormal, therefore, the accuracy of the GTID is ensured. Moreover, when the processing is performed on GTIDs, a manner of indicating the standby GTM in batches to process the GTIDs is adopted, which can minimize the delay and improve the concurrency capability while the reliability is ensured, and the efficiency of processing the GTID is greatly improved. Therefore, the problems that, by the recording method of the GTID in the related art, the disk is easily damaged, the interruption period of the system is long, and the normal operation of the service is affected are solved.

### BRIEF DESCRIPTION OF DRAWINGS

Accompanying drawings described herein are intended to provide a further understanding of the present invention, and form a part of the present invention. Schematic embodiments and descriptions of the schematic embodiments are adopted to explain the present invention, but do not form improper limits to the present invention, in which:
FIG. 1 is a block diagram showing the hardware structure of a computer terminal implementing a method for synchronizing a global transaction identification (GTID) according to an embodiment of the present invention;
FIG. 2 is a flowchart of a first method for synchronizing a global transaction identification (GTID) according to an embodiment of the present invention;
FIG. 3 is a flowchart of a second method for synchronizing a global transaction identification (GTID) according to an embodiment of the present invention;
FIG. 4 is a system structural diagram according to an embodiment of the present invention;
FIG. 5 is a system flowchart diagram according to an embodiment of the present invention;
FIG. 6 is a schematic diagram of reading a persistent file when a GTM is started according to an embodiment of the present invention;
FIG. 7 is a state switching flowchart when a GTM is started according to an embodiment of the present invention;
FIG. 8 is a state switching flowchart after the GTM is isolated/DOWN according to an embodiment of the present invention;
FIG. 9 is a state switching flowchart of recovering the GTM after the GTM is isolated/DOWN according to an embodiment of the present invention;
FIG. 10 is a structural block diagram of a first device for synchronizing a global transaction identification (GTID) according to an embodiment of the present invention; and
FIG. 11 is a structural block diagram of a second device for synchronizing a global transaction identification (GTID) according to an embodiment of the present invention.

### DETAILED DESCRIPTION

The present invention is described below with reference to the drawings and embodiments in detail. It should be noted that the embodiments of the present invention and the characteristics of the embodiments may be combined with each other if there is no conflict.

It should be noted that, terminologies such as "first" and "second" in the specification, claims and accompanying drawings of the present invention are only used to distinguish similar objects, rather than to describe a special order or a precedence order.

The solution in the embodiment of the present invention can distribute a transaction ID with high reliability and high performance, and has the capability of switching and recovering services quickly in an abnormal situation. The requirement of the distributed database system for processing transactions at a high speed is satisfied.

First, some concepts that will be used in the embodiments of the present invention are explained.

A cluster, which is a logical unit of distributed transactions and consists of several related databases. A cluster ID identifies a cluster.

A global transaction ID (GTID), which is globally unique across a cluster in the entire distributed system.

A global transaction manager (GTM), which is responsible for maintaining the GTID of a unfinished transaction (active GTID) in the entire distributed system.

A proxy, i.e. a data service proxy server, which is responsible for optimizing the structured query language (SQL), routing the SQL, balancing the load of data nodes, scheduling the distributed transactions, etc. If services to be processed are related to the distributed transactions, the proxy needs to apply for a GTID from GTM, release a GTID, and query the active GTID in the current system etc.

Full persistence, which means that all information is stored persistently at once (for example, stored on disk).

Incremental persistence, which means that only information which changes at this time is stored persistently. Information at a certain moment is equal to the full persistence information at another certain moment in the past plus the incremental persistence information between another certain moment in the past and the certain moment.

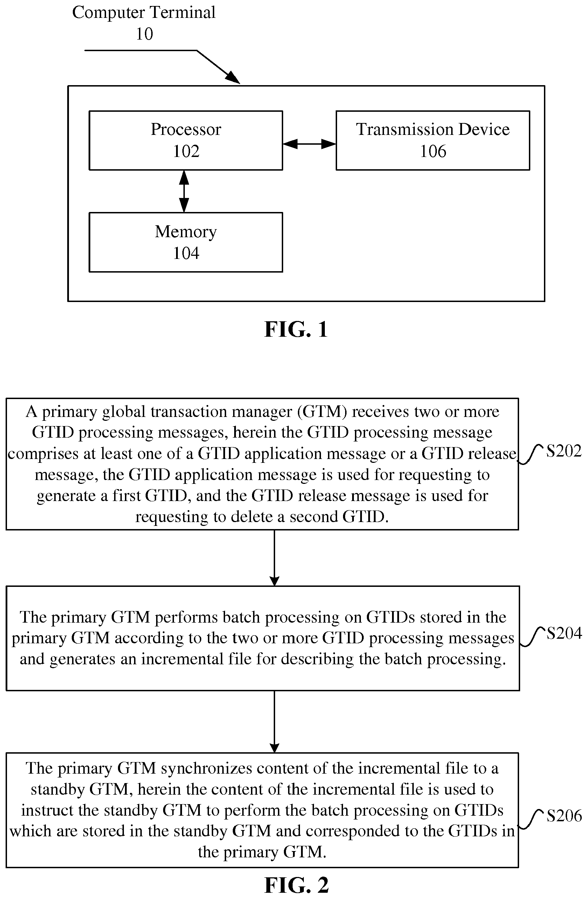

The method provided in an embodiment of the present invention can be implemented on operational means, such as a mobile terminal, a computer terminal, or the like. By taking that the method is implemented on a computer terminal for example, FIG. 1 is a hardware structural block diagram of a computer terminal implementing a method for synchronizing a global transaction identification (GTID) according to an embodiment of the present invention. As shown in FIG. 1, a computer terminal 10 may include one or more processors 102 (only one of which is shown in FIG. 1) (processor 102 may include, but is not limited to, a processing device such as a microprocessor MCU or a programmable logic device FPGA), a memory 104 for storing data, and a transmission device 106 for communication functions. It will be understood by those skilled in the art that the structure shown in FIG. 1 is merely illustrative, and does not limit the structure of the above electronic device. For example, the computer terminal 10 may also include more or fewer components than those shown in FIG. 1, or have a different configuration from that shown in FIG. 1.

The memory 104 can be used to store software programs and modules of application software, such as program instructions/modules corresponding to the method for synchronizing the global transaction identification GTID in the embodiment of the present invention. The processor 102 runs the software programs and modules stored in the memory 104 to perform various functional applications and data processing, that is, implement the above method. The memory 104 may include high speed random access memory and may also include non-transitory memory such as one or more magnetic storage devices, flash memory, or other non-transitory solid state memory. In some examples, the memory 104 may further include memory remotely located relative to processor 102, which may be coupled to computer terminal 10 via a network. Examples of the network include, but are not limited to, the Internet, intranets, local area networks, mobile communication networks, and combinations thereof.

The transmission device 106 is used for receiving or transmitting data via a network. The specific example of the network may include a wireless network provided by a communication provider of the computer terminal 10. In an example, the transmission device 106 includes a network interface controller (NIC) that can be connected to other network devices through a base station to communicate with the Internet. In an example, the transmission device 106 can be a radio frequency (RF) module for communicating with the Internet wirelessly.

In an embodiment of the present invention, a method for synchronizing a global transaction identification (GTID) running on a computer terminal is provided. FIG. 2 is a flowchart of a first method for synchronizing a global transaction identification (GTID) according to an embodiment of the present invention. As shown in FIG. 2, the process includes the following operations.

Operation S202: a primary global transaction manager (GTM) receives two or more GTID processing messages, herein the GTID processing message comprises at least one of a GTID application message or a GTID release message, the GTID application message is used for requesting to generate a first GTID, and the GTID release message is used for requesting to delete a second GTID.

Operation S204: the primary GTM performs a batch processing on GTIDs stored in the primary GTM according to the two or more GTID processing messages and generates an incremental file for describing the batch processing.

Operation S206: the primary GTM synchronizes content of the incremental file to a standby GTM, herein the content of the incremental file is used to instruct the standby GTM to perform the batch processing on GTIDs which are stored in the standby GTM and corresponding to the GTIDs in the primary GTM.

Through the above operations, the data storage is performed by using the combination of the primary and standby GTMs, which ensures that the data storage is switched to another GTM quickly once a single GTM is abnormal. Moreover, when the processing is performed on GTIDs, a manner of instructing the standby GTM in batches to process the GTIDs is adopted, which can minimize the delay and improve the concurrency capability while the reliability is ensured, and greatly improve the efficiency of processing the GTIDs. Therefore, the problems that, caused by the method for recording the GTID in the related art, the disk is easily damaged, the interruption period of the system is long, and the normal operation of the service is affected are solved.

In an embodiment, the operation that the primary GTM generates the incremental file for describing the batch processing may include: the primary GTM generates the incremental file in batches in a sequential write manner in an order of performing the batch processing on the GTIDs stored in the primary GTM. In this embodiment, the primary GTM processes the stored GTIDs according to two or more GTID processing messages. The primary GTM may also write multiple processes in batches into the incremental file and instruct the multiple processes to the standby GTM only by sending a message to the standby GTM once, so that multiple interactions between the primary GTM and the standby GTM are avoided, the delay is reduced and the service processing speed is improved.

In an embodiment, the method further includes: after the primary GTM synchronizes the content of the incremental file to the standby GTM, the primary GTM determines whether an incremental synchronization response message returned by the standby GTM after the standby GTM performs the batch processing is received within a predetermined time. When the primary GTM determines that the incremental synchronization response message is received within the predetermined time, the primary GTM returns a processing response to a transmitting end for transmitting the GTID processing message according to the incremental synchronization response message; and/or when the primary GTM determines that the incremental synchronization response message is not received within the predetermined time, the primary GTM synchronizes all the GTIDs, which are processed by the primary GTM in batches and then stored in the primary GTM, to the standby GTM. In this embodiment, when a response is received from the standby GTM by the primary GTM within a predetermined time (the predetermined time may be flexibly set, for example, 1 s, 5 s), it means that the GTID is processed by the standby GTM according to the incremental file. When a response is not received from the standby GTM by the primary GTM within a predetermined time, it means that the GTID is not processed by the standby GTM successfully, in this situation, in order to ensure the consistency of the data in the primary GTM with the data in the standby GTM, the primary GTM can synchronize all GTIDs stored currently by itself to the standby GTM. Therefore, the consistency of the data in the primary GTM with the data in the standby GTM can be ensured. In practical applications, when a response is not received from the standby GTM by the primary GTM within a predetermined time, the primary GTM can send the incremental file to the standby GTM again (the operation of sending the incremental file is repeated at least twice or more). If a response is not received from the standby GTM by the primary GTM after the primary GTM sends the incremental file to the standby GTM again, the primary GTM synchronizes all GTIDs stored currently by itself to the standby GTM.

In an embodiment, the method further includes: after the primary GTM synchronizes the content of the incremental file to the standby GTM, the primary GTM stores all GTIDs, which are processed in batches and then stored in the primary GTM, into a first disk; and the primary GTM deletes the incremental file. In this embodiment, the primary GTM can periodically perform a full persistence operation on the GTIDs stored by itself, that is, all the GTIDs stored by itself are stored into the first disk, and can delete the incremental file stored by itself after performs the full persistence operation, which ensures that a new incremental file can be continued written when a new GTID processing message is received. In such a manner, the storage space of the primary GTM can be saved, the incremental persistence file will not too large and fast recovery under abnormal conditions can be ensured.

In an embodiment, the method further includes: the primary GTM reads a first full file and a first latest incremental file which are stored in the primary GTM after the primary GTM is restarted due to an exception, herein the first full file is used for describing all GTIDs stored in the primary GTM at a predetermined moment, and the first latest incremental file is used for describing change information of the GTIDs stored in the primary GTM. When the primary GTM determines that the time at which the first latest incremental file is generated is later than the time at which the first full file is generated, the primary GTM recovers and stores GTIDs which are actually stored in the primary GTM before the primary GTM restarts according to the first full file and the first latest incremental file; and/or when the primary GTM determines that the time at which the first latest incremental file is generated is earlier than the time at which the first full file is generated, the primary GTM recovers and stores GTIDs which are actually stored in the primary GTM before the primary GTM restarts according to only the first full file. In this embodiment, whether the time at which the first latest incremental file is generated is later than the time at which the first full file is generated can be determined by the primary GTM according to the maximum identifier information of the GTIDs in the two file (the identifier information may correspond to the time, the later the GTID generated, the larger the identification information is) or can be determined using other methods.

In an embodiment, the method further includes: after the primary GTM recovers and stores the GTIDs which are actually stored by the primary GTM before the primary GTM restarts when restart due to an exception occurs to the primary GTM and the standby GTM at the same time, the primary GTM synchronizes the recovered and stored GTIDs to the standby GTM. In this embodiment, before the primary GTM is abnormal, there may be GTIDs that are not synchronized to the standby GTM. When the primary GTM restarts, the GTIDs recovered and stored in the primary GTM can be synchronized to the standby GTM, thereby ensuring that the GTIDs in the primary GTM is in synchronization with the GTIDs in the standby GTM.

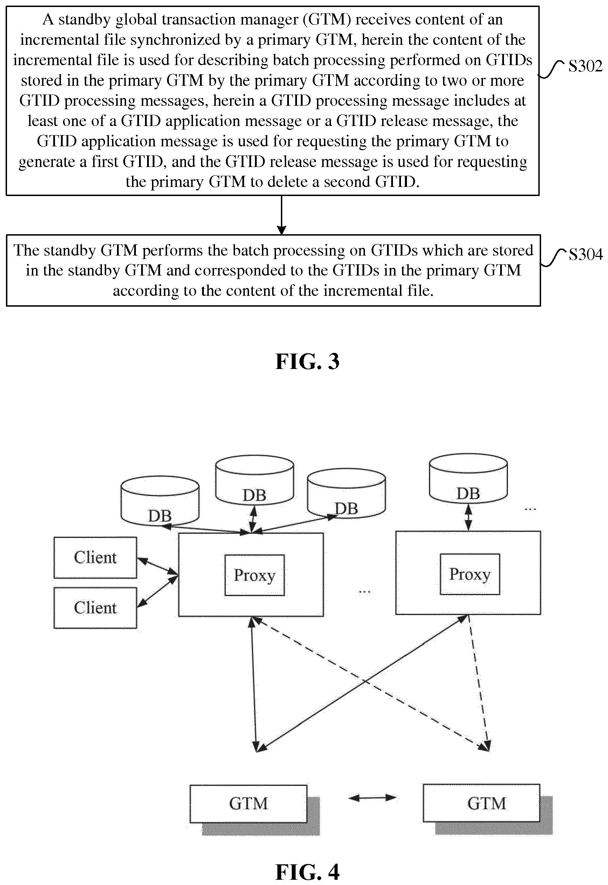

In an embodiment of the present invention, a global transaction identification (GTID) synchronization method running on a computer terminal is provided. FIG. 3 is a flowchart of a second method of synchronizing a global transaction identification (GTID) according to an embodiment of the present invention. As shown in FIG. 3, the processes include the following operations.

Operation S302: a standby global transaction manager (GTM) receives content of an incremental file synchronized by a primary GTM, herein the content of the incremental file is used for describing a batch processing performed on GTIDs stored in the primary GTM by the primary GTM according to two or more GTID processing messages, herein a GTID processing message includes at least one of a GTID application message or a GTID release message, the GTID application message is used for requesting the primary GTM to generate a first GTID, and the GTID release message is used for requesting the primary GTM to delete a second GTID.

Operation S304: the standby GTM performs a batch processing on GTIDs which are stored in the standby GTM and corresponding to the GTIDs in the primary GTM according to the content of the incremental file.

Through the above operations, the data storage is performed by using the combination of the primary and standby GTMs, which ensures that the data storage is switched to another GTM quickly once a single GTM is abnormal. Moreover, when the processing is performed on GTIDs, a manner that the primary GTM instructs the standby GTM in batches to process the GTIDs is adopted, which can minimize the delay and improve the concurrency capability while the reliability is ensured, and greatly improve the efficiency of processing the GTIDs. Therefore, the problems that, caused by the method for recording the GTID in the related art, the disk is easily damaged, the interruption period of the system is long, and the normal operation of the service is affected are solved.

In an embodiment, the method further includes: after the standby GTM performs the batch processing on the GTIDs which are stored in the standby GTM and corresponding to the GTIDs in the primary GTM according to the content of the incremental file, the standby GTM returns an incremental synchronization response message to the primary GTM within a predetermined time when the standby GTM determines that the batch processing is successful.

In an embodiment, when the standby GTM processes the GTIDs stored in the standby GTM according to the content of the incremental file, the processing may fail. Or the processing succeeds, but the response message is not fed back within a predetermined time. In these situations, the primary GTM will consider that processing of the standby GTM fails and will synchronizes all the GTIDs to the standby GTM. The operations in this case are explained below. The method further includes: after the primary GTM performs the batch processing on the GTIDs which are stored in the standby GTM and corresponding to the GTIDs in the primary GTM according to the content of the incremental file, the standby GTM receives all GTIDs, which are stored in the primary GTM after the batch processing is performed, from the primary GTM; and the standby GTM updates GTIDs stored in the standby GTM according to the GTIDs received from the primary GTM.

In an embodiment, the method further includes: after the standby GTM performing the batch processing on the GTIDs which are stored in the standby GTM and corresponding to the GTIDs in the primary GTM according to the content of the incremental file, the standby GTM stores all the GTIDs, which are processed in batches and then stored in the standby GTM, into a second disk; and deletes the incremental file. In this embodiment, the standby GTM can periodically perform a full persistence operation on the GTIDs stored by itself, that is, all the GTIDs stored by itself are stored into the second disk, and can delete the incremental file stored by itself after performs the full persistence operation, which ensures that a new incremental file can be continued written when a new GTID processing message is received. In such a manner, an unnecessary memory usage of the standby GTM can be avoided, the storage space of the standby GTM can be saved, the incremental persistence file will not too large and fast recovery under abnormal conditions can be ensured.

In an embodiment, the method further includes: the standby GTM reads a second full file and a second latest incremental file which are stored in the standby GTM after the standby GTM is restarted due to an exception. Herein the second full file is used for describing all GTIDs stored in the standby GTM at a predetermined moment, and the second latest incremental file is used for describing change information of the GTIDs stored in the standby GTM. When the standby GTM determines that the time at which the second latest incremental file is generated is later than the time at which the second full file is generated, the standby GTM recovers and stores, according to the second full file and the second latest incremental file, GTIDs which are actually stored by the standby GTM before the standby GTM restarts; and/or when the standby GTM determines that the time at which the second latest incremental file is generated is earlier than the time at which the second full file is generated, the standby GTM recovers and stores, according to only the second full file, GTIDs which are actually stored by the standby GTM before the standby GTM restarts. In this embodiment, whether the time at which the second latest incremental file is generated is later than the time at which the second full file is generated can be determined by the standby GTM according to the maximum identifier information of the GTIDs in the two file (the identifier information may correspond to the time, the later the GTID generated, the larger the identification information is) or can be determined using other methods.

In an embodiment, the method further includes: when restart due to an exception occurs to the primary GTM and the standby GTM at the same time, after the standby GTM recovers and stores the GTIDs which are actually stored by the standby GTM before the standby GTM restarts, the standby GTM receives the recovered and stored GTIDs from the primary GTM; the standby GTM compares the recovered and stored GTIDs received from the primary GTM with the recovered and stored GTIDs in the standby GTM; and the standby GTM updates the recovered and stored GTIDs in the standby GTM using the recovered and stored GTIDs received from the primary GTM when the standby GTM determines that the recovered and stored GTIDs received from the primary GTM is the latest stored GTIDs according to the comparison result. In this embodiment, after restarts, the standby GTM recovers and stores the GTIDs which are actually stored in the standby GTM before the standby GTM restarts, and updates the GTIDs stored by itself according to the GTIDs from the primary GTM. It should be noted that, in the practical application, when restart due to an exception occurs to the primary GTM and the standby GTM at the same time, the standby GTM can receive directly the GTIDs synchronized from the primary GTM and store them on the memory of the standby GTM, instead of performing the operation of recovering and storing the GTIDs.

The present invention will be described below in conjunction with specific embodiments.

For the above-mentioned problems in the related art, a high-availability and high-speed GTIDs distribution service is provided in an embodiment of the present invention. The high-availability database transaction distributor provided in the embodiment of the present invention is implemented as follows.

The system architecture diagram shown in FIG. 4 illustrates a system structural according to an embodiment of the present invention. GTIDs are managed (the application, release and maintenance of a current active transaction ID, etc.) by two active GTM apparatuses (i.e. a primary GTM and a standby GTM). If transaction request messages reach at the same time, the request messages reached at the same time are processed in batches, thereby improving the throughput. During the running procedure of the GTM (including the primary GTM and/or the standby GTM), the global transaction ID can be stored as a binary file in a manner of combining the timed full persistence and the incremental persistence. When the GTM restarts and recovers the data, the GTM reads the full persistence file (i.e. the full file) first and then read the incremental persistence file (i.e. the incremental file). The snapshot of the active transaction ID is recovered to the time before the GTM exits. Compared with storing the GTIDs in a database, the accuracy of the data can be ensured and the performance can be improved extremely.

In the embodiment of the present invention, from the perspective of internal functions, the GTM may include a message distribution module, a message execution module, a data persistence module, etc. which will be described below.

The message distribution module is configured to forward the received proxy request message to a respective message execution module according to the Cluster ID.

The message execution module is configured to process the received external request message, and store the increment of the GTIDs in batches and synchronize information on the memory to a module of a GTM standby machine (corresponding to the standby GTM described above).

The data persistence module is configured to perform the full persistence of activated GTIDs periodically in the background.

After the full persistence of activated GTIDs is performed periodically, the message execution module starts to perform a new incremental persistence of GTIDs for a new received proxy.

When receives multiple GTID application messages and/or multiple GTID releasing messages at the same time, the message execution module performs the batch processing, i.e. writes incremental files once and synchronizes the content of the increment files in batches to a standby machine. The recorded content about applying and releasing GTID is stored in the incremental file in sequence. The storage manner can be binary. The file sequential writing manner can improve the write performance extremely, return quickly and reduce the delay of returning the message. The GTM adopts the dual-active mode, and there is a heartbeat mechanism between the two machines, and the memory of the two machines can synchronically update the increment in batches. When the GTM restarts and recovers the data, the GTM first reads the full persistent file, and then reads the incremental persistent file, the active transaction ID can be quickly recovered to the snapshot before the GTM exits. In order to improve the performance, a operating mode in which the GTM primary machine (corresponding to the above-mentioned primary GTM) reads the timed full persistent file and the incremental persistent file and the memory of the GTM standby machine stores the timed full persistent file at the same time is adopted (the GTM standby machine can also read the timed full persistent file and the incremental persistent file first, and then store them into the memory of GTM standby machine). When the primary and standby machines switch quickly, the persistence manner also switches. When the two machines are abnormal at the same time, the active transaction ID data in the memory of one machine is compared with that in the memory of the other machine after the two machines restart, the primary-standby relationship between the two machines is determined and the latest active transaction ID data is exchanged.

The solution in the embodiments of the present invention can achieve the following beneficial effects: the GTM adopts a dual-active mode, so that the switching speed is fast when a single GTM is abnormal, thereby providing the high-availability capability. By storing the full file and the incremental file, and performing the processing in batches after multiple service messages are received and writing the incremental file in batches once in the file sequential writing manner, the delay can be minimized and the high concurrency capability can be improved while the reliability is ensured. Storing the file in the file sequential writing manner is more efficient than a typical database storage solution.

As shown in FIG. 4, in an embodiment, a distributed system based on database transaction distribution is provided, which includes one or more data service proxy servers (labeled as proxy in FIG. 4), one or more clients for accessing databases, (labeled as client in FIG. 4), multiple database node devices (i.e. DB nodes, labeled as DB in FIG. 4). The GTM is divided into the primary GTM (which can be referred to as the GTM primary machine or the primary machine) and the standby GTM (which can be referred to as the GTM standby machine or the standby machine) according to the operating states of the GTM.

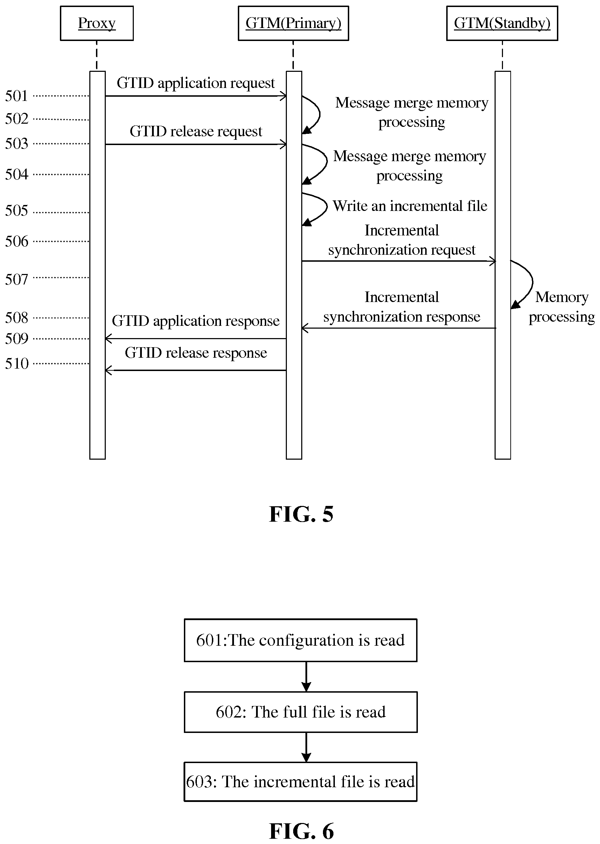

FIG. 5 is a system flowchart diagram according to an embodiment of the present invention. As shown in FIG. 5, the processes provided in this embodiment mainly include the following operations.

Operation S501: a primary GTM receives a GTID application request message, the message distribution module forwards the message to the message execution module, and the message execution module generates the GTID.

Operation S502: the message execution module of the primary GTM stores the generated GTID into the memory.

Operation S503-504: the primary GTM receives a GTID release request message, and then the message distribution module forwards the message to the message execution module. The message execution module deletes the corresponding data in the memory.

Operation S505: the operation that the message execution module processes the messages in batches is finished, the incremental file is written in batches in a file sequential writing manner.

Operation S506: the content of the incremental file generated in the operations S501-S504 is synchronized as a batch to the standby GTM.

Operation S507: the standby GTM stores the content of the incremental file to the memory.

Operation S508: the standby GTM returns the incremental synchronization response (corresponding to the incremental synchronization response message described above) to the primary GTM.

Operation S509-S510: after the primary GTM receives the incremental synchronization response returned from the standby GTM, the primary GTM sequentially returns responses to the GTID application request in S501 and the GTID release request in S503.

FIG. 6 is a processing procedure when a GTM restarts according to an embodiment of the present invention. As shown in FIG. 6, the method provided by this embodiment mainly includes the following operations.

Operation S601: the configuration is read.

Operation S602: the full file is read.

Operation S603: the incremental file is read.

Specifically, when the GTM restarts, the GTM first reads the full file, and then reads the incremental file. When the GTM reads the incremental file, the GTM compares the maximum GTID in the full file with the maximum GTID in the incremental file. When the maximum GTID in the incremental file is greater than or equal to the maximum GTID in the full file, it means that the incremental file is valid and can be read. When the maximum GTID in the incremental file is smaller than the maximum GTID in the full file, it means that the incremental file is invalid and does not need to be read.

In embodiments of the present invention, the operations of the GTM performing the incremental persistence in real time can be configurable. The incremental persistence is configured by the GTM primary machine, which ensures the accuracy of the GTID persistence performed by the GTM primary machine. When the incremental persistence is configured by the GTM standby machine, both the primary GTM and the standby GTM are always perform the incremental persistence, the processing performance is affected. The GTM standby machine can be configured to do not perform the incremental persistence in the non-active state and perform the incremental persistence when the primary GTM exits and the GTM standby machine switches to the active state. As such, it ensures that only one of the primary GTM and the standby GTM performs the incremental persistence and ensures the accuracy of the GTID persistence performed by the GTM primary machine.

In the embodiments of the present invention, the manner of performing the incremental persistence of the GTID by the GTM can be configurable. When the incremental persistence of the GTID is performed, some devices cannot ensure to write the data cached by the system into a disk correctly when the power is off. In this case, if the data is configured to be written into the disk, the processing performance of the system is decreased but the accuracy of the incremental persistence of the GTID can be ensured. For the device with backup power, when the incremental persistence of the GTID is performed, the data cached by the system can be ensured to be written into the disk correctly when the power is off. In this case, if the data is configured to be written into the system cache, the processing performance of the system is increased and the accuracy of the incremental persistence of the GTID is ensured.

In the embodiments of the present invention, the GTM has the following three operating states.

Invalid mode (MODE_INACTIVE_GTID_NONVALID): GTID is invalid, no service is provided.

Inactive mode (MODE_INACTIVE): GTID is valid. The GTM, as a standby machine, processes the full synchronization message and the incremental synchronization message, which ensures the GTID stored in the standby machine valid. When the primary GTM exits, the GTM can take over the primary machine to provide the service for the proxy.

Active mode (MODE_ACTIVE): GTID is valid, and the GTM can provide service for the proxy.

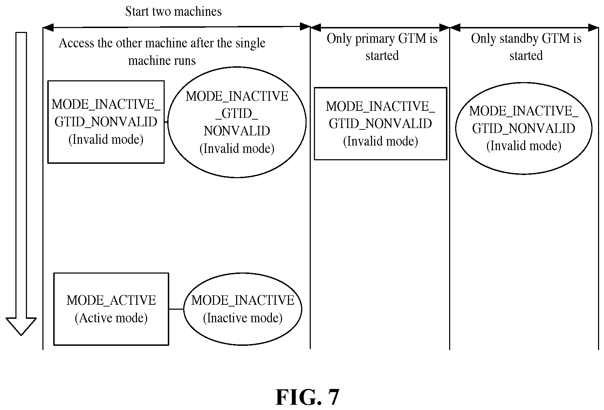

FIG. 7 is a state switching flowchart when a GTM starts.

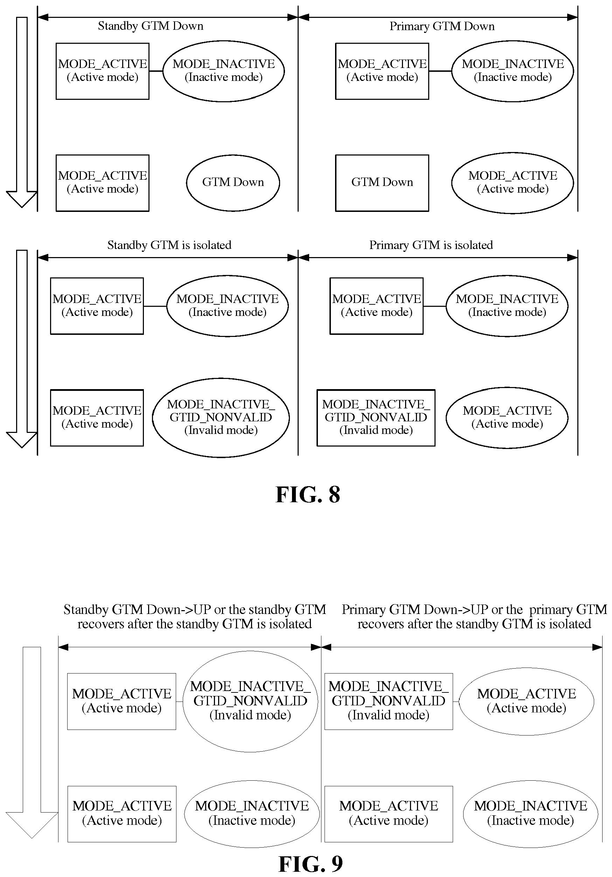

FIG. 8 is a state switching flowchart after the GTM is isolated/DOWN (exits).

FIG. 9 is a state switching flowchart of recovering the GTM after the GTM is isolated/DOWN (exit).

In order to keep the active GTIDs in the memory of the primary machine and the standby machine consistent, the embodiments of the present invention can provide a mechanism in which when the incremental synchronization between the primary machine and the standby machine expires, the full GTID data can be synchronized from the GTM primary machine to the GTM standby machine.

In order to keep the active GTIDs in the memory of the primary machine and the standby machine consistent, when the GTM is recovered after the GTM is isolated/DOWN (exits), the full GTID data can be synchronized from the GTM in the MODE_ACTIVE state to the other GTM.

The proxy is linked to the GTM primary and standby machines which provide the GTID application, release and query service for the proxy only when the GTM is in a MODE-ACTIVE state and return failure information to the proxy when the GTM is in other states.

The embodiments of the present invention also provide a mechanism to ensure that only one of the GTM primary and standby machines is in the MODE_ACTIVE state to provide service for the proxy.

In the embodiments of the present invention, the timed full persistence and the incremental persistence can be performed cooperatively. The incremental file can be deleted after the message execution module in the GTM periodically transfers the persistence content to the persistence module to perform the full persistence. When a new GTID application message and a new GTID release message are received, a new incremental file is written. As such, the incremental persistent file will not too large, the environment can be recovered quickly under abnormal conditions.

It should be noted that, in the embodiments of the present invention, the message execution modules can be grouped according the cluster ID. Each cluster can be served by a dedicated message execution module, and the persistence file is saved according to the granularity of the cluster. Of course, the message execution modules can provide services without being grouped and the persistence file is saved together.

In the embodiments of the present invention, the number of the group of the primary and standby GTMs can be one or more. By setting multiple groups of the primary and standby GTMs, the service performance can be improved and the higher capacity requirement can be met.

Through the above description of the embodiments, those skilled in the art may clearly understand that the invention may be implemented by software and a necessary universal hardware platform according to the methods of the embodiments, and of course, also may be implemented by hardware, but in most cases, the former is a preferable implementation manner. Based on such an understanding, the technical solutions of the invention substantially or a part with contributions to the related art may be embodied in form of a software product, and the computer software product is stored in a storage medium (such as a Read-Only Memory (ROM)/Random-Access Memory (RAM), a disk and a compact disk), including a plurality of instructions arranged to enable a terminal device (which may be a mobile phone, a computer, a server, a network device or the like) to execute the method in each embodiment of the invention.

A device for synchronizing a global transaction identification (GTID) is further provided in the embodiments. The device is configured to implement the above-mentioned embodiments and the preferred implementation manners. As used in the followings, terms "module" can achieve a combination of software and/or hardware with predetermined functions. Although the device described by the following embodiments is preferably implemented by the software, it may also be contemplated to be implemented by the hardware or the combination of the software and the hardware.

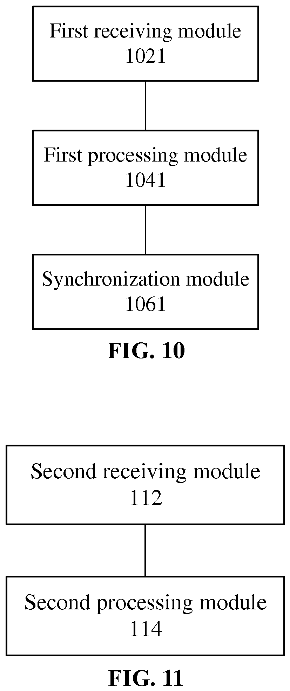

FIG. 10 is a structural block diagram of a first device for synchronizing a global transaction identification (GTID) according to an embodiment of the present invention. The device can be applied to a primary global transaction manager (GTM). As shown in FIG. 10, the device includes a first receiving module 1021 (corresponds to the message distribution module above), a first processing module 1041 and a synchronization module 1061 (the first processing module 1041 and the synchronization module 1061 correspond to the message execution module above). The device will be described below.

The first receiving module 1021 is configured to receive two or more GTID processing messages. Herein a GTID processing message comprises at least one of a GTID application message or a GTID release message, the GTID application message is used for requesting to generate a first GTID, and the GTID release message is used for requesting to delete a second GTID. The first processing module 1041 is connected to the first receiving module 1021 and configured to perform batch processing on GTIDs stored in a primary GTM according to the two or more GTID processing messages and generate an incremental file for describing the batch processing. The synchronization module 1061 is connected to the first processing module 1041 and configured to synchronize content of the incremental file to a standby GTM. Herein the content of the incremental file is used to instruct the standby GTM to perform the batch processing on GTIDs which are stored in the standby GTM and corresponding to the GTIDs in the primary GTM.

In an embodiment, the first processing module 1041 can generate the incremental file for describing the batch processing in a manner as follows: the primary GTM generates the incremental file in batches in a sequential write manner in an order of performing the batch processing on the GTIDs stored in the primary GTM. In this embodiment, the primary GTM processes the stored GTIDs according to two or more GTID processing messages. The primary GTM may also write multiple processes in batches into the incremental file and instruct the multiple processes to the standby GTM only by sending a message to the standby GTM once, so that multiple interactions between the primary GTM and the standby GTM are avoided, the delay is reduced and the service processing speed is improved.

In an embodiment, the device further includes: a determining and processing module. The determining and processing module is configured to: when the content of the incremental file is synchronized to the standby GTM, determine whether an incremental synchronization response message returned by the standby GTM after the standby GTM performs the batch processing is received within a predetermined time. When the determination result is that the incremental synchronization response message is received by the primary GTM within the predetermined time, the primary GTM returns a processing response to a transmitting end for transmitting the GTID processing message according to the incremental synchronization response message; and/or when the determination result is that the incremental synchronization response message is not received by the primary GTM within the predetermined time, the primary GTM synchronizes all the GTIDs, which are stored in the primary GTM after the batch processing is performed, to the standby GTM. In this embodiment, when a response is received from the standby GTM by the primary GTM within a predetermined time (the predetermined time may be flexibly set, for example, 1 s, 5 s), it means that the GTID is processed by the standby GTM according to the incremental file. When a response is not received from the standby GTM by the primary GTM within a predetermined time, it means that the GTID is not processed by the standby GTM successfully. In this situation, in order to ensure the consistency of the data in the primary GTM with the data in the standby GTM, the primary GTM can synchronize all GTIDs stored currently by itself to the standby GTM. Therefore, it ensures the consistency of the data in the primary GTM with the data in the standby GTM. In practical applications, when a response is not received from the standby GTM by the primary GTM within a predetermined time, the primary GTM can send the incremental file to the standby GTM again (the operation of sending the incremental file is repeated at least twice or more). If a response is not received from the standby GTM by the primary GTM after the primary GTM sends the incremental file to the standby GTM again, the primary GTM synchronizes all GTIDs stored currently by itself to the standby GTM.

In an embodiment, the device further includes a first storage module (corresponding to the date persistence module) and a deleting module. Herein the first storage module is configured to store all GTIDs, which are processed in batches and then stored in the primary GTM, into a first disk after the content of the incremental file is synchronized to the standby GTM. The deleting module is connected to the first storage module and configured to delete the incremental file. In this embodiment, the primary GTM can periodically perform a full persistence operation on the GTIDs stored by itself, that is, all the GTIDs stored by itself are stored into the first disk, and can delete the incremental file stored by itself after performs the full persistence operation, which ensures that a new incremental file can be continued written when a new GTID processing message is received. In such a manner, the storage space of the primary GTM cannot be occupied unnecessarily, the storage space of the primary GTM can be saved, the incremental persistence file will not too large and fast recovery under abnormal conditions can be ensured.

In an embodiment, the device further includes a first reading and processing module. The first reading and processing module is configured to: read a first full file and a first latest incremental file which are stored in the primary GTM after the primary GTM is restarted due to an exception. Herein the first full file is used for describing all GTIDs stored in the primary GTM at a predetermined moment, and the first latest incremental file is used for describing change information of the GTIDs stored in the primary GTM. The first reading and processing module is further configured to: recover and store, according to the first full file and the first latest incremental file, GTIDs which are actually stored by the standby GTM before the standby GTM restarts when it is determined that the time at which the second latest incremental file is generated is later than the time at which the second full file is generated; and/or recover and store, according to only the second full file, GTIDs which are actually stored by the standby GTM before the standby GTM restarts when it is determined that the time at which the first latest incremental file is generated is earlier than the time at which the second full file is generated. In this embodiment, whether the time at which the first latest incremental file is generated is later than the time at which the first full file is generated can be determined by the primary GTM according to the maximum identifier information of the GTID in the two file (the identifier information may correspond to the time, the later the GTID generated, the larger the identification information is) or can be determined using other methods.

In an embodiment, the synchronization module is further configured to: when restart due to an exception occurs to the primary GTM and the standby GTM at the same time, synchronize the recovered and stored GTIDs to the standby GTM after the primary GTM recovers and stores the GTIDs which are actually stored by the primary GTM before the primary GTM restarts. In this embodiment, before the primary GTM is abnormal, there may be GTIDs that are not synchronized to the standby GTM. When the primary GTM restarts, the GTIDs recovered and stored in the primary GTM can be synchronized to the standby GTM, thereby ensuring that the GTIDs in the primary GTM is in synchronization with the GTIDs in the standby GTM.

FIG. 11 is a structural block diagram of a second device for synchronizing a global transaction identification (GTID) according to an embodiment of the present invention. As shown in FIG. 11, the second synchronization device includes a second receiving module 112 and a second processing module 114. The device will be described below.

The second receiving module 112 is configured to receive content of an incremental file synchronized by a primary GTM. Herein the content of the incremental file is used for describing batch processing performed on GTIDs stored in the primary GTM by the primary GTM according to two or more GTID processing messages. Herein a GTID processing message comprises at least one of a GTID application message or a GTID release message, the GTID application message is used for request the primary GTM to generate a first GTID, and the GTID release message is used for request the primary GTM to delete a second GTID. The second processing module 114 is connected to the second receiving module 112 and configured to perform the batch processing on GTIDs which are stored in the standby GTM and corresponding to the GTIDs in the primary GTM according to the content of the incremental file.

In an embodiment, the device also includes a returning module. The returning module is configured to return an incremental synchronization response message to the primary GTM within a predetermined time after performing the batch processing on the GTIDs which are stored in the standby GTM and corresponding to the GTIDs in the primary GTM according to the content of the incremental file and determining that the batch processing is successful.

In an embodiment, the device further includes a updating module. The updating module is configured to receive all GTIDs, which are stored in the primary GTM after the batch processing is performed, from the primary GTM after the batch processing is performed on the GTIDs which are stored in the standby GTM and corresponding to the GTIDs in the primary GTM according to the content of the incremental file, and update GTIDs stored in the standby GTM according to the GTIDs received from the primary GTM.

In an embodiment, the device further includes a second storage module and a second deleting module. The second storage module is configured to store all the GTIDs, which are processed by standby GTM in batches and then stored in the standby GTM, into a second disk after the batch processing is performed on the GTIDs which are stored in the standby GTM and corresponding to the GTIDs in the primary GTM according to the content of the incremental file. The second deleting module is connected to the second storage module and configured to delete the incremental file. In this embodiment, the standby GTM can periodically perform a full persistence operation on the GTIDs stored by itself, that is, all the GTIDs stored by itself are stored into the second disk, and can delete the incremental file stored by itself after performs the full persistence operation, which ensures that a new incremental file can be continued written when a new GTID processing message is received. In such a manner, the storage space of the standby GTM cannot be occupied unnecessarily, the storage space of the primary GTM can be saved, the incremental persistence file will not too large and fast recovery under abnormal conditions can be ensured.

In an embodiment, the device further includes a second reading and processing module. The second reading and processing module is configured to read a second full file and a second latest incremental file which are stored in the standby GTM after the standby GTM is restarted due to an exception. Herein the second full file is used for describing all GTIDs stored in the standby GTM at a predetermined moment, and the second latest incremental file is used for describing change information of the GTIDs stored in the standby GTM. The second reading and processing module is further configured to: recover and store, according to the second full file and the second latest incremental file, GTIDs which are actually stored by the standby GTM before the standby GTM restarts when it is determined that the time at which the second latest incremental file is generated is later than the time at which the second full file is generated; and/or recover and store, according to only the second full file, GTIDs which are actually stored by the standby GTM before the standby GTM restarts when it is determined that the time at which the second latest incremental file is generated is earlier than the time at which the second full file is generated. In this embodiment, whether the time at which the second latest incremental file is generated is later than the time at which the second full file is generated can be determined by the standby GTM according to the maximum identifier information of the GTID in the two file (the identifier information may correspond to the time, the later the GTID generated, the larger the identification information is) or can be determined using other methods.

In an embodiment, the updating module is further configured to: when restart due to an exception occurs to the primary GTM and the standby GTM at the same time, after the standby GTM recovers and stores the GTIDs which are actually stored by the standby GTM before the standby GTM restarts, receive the recovered and stored GTIDs from the primary GTM; compare the recovered and stored GTIDs received from the primary GTM with the recovered and stored GTIDs in the standby GTM; and update the recovered and stored GTIDs in the standby GTM using the recovered and stored GTIDs received from the primary GTM when it is determined that the recovered and stored GTIDs received from the primary GTM is the latest stored GTIDs according to the comparison result. In this embodiment, after restarts, the standby GTM recovers and stores the GTIDs which are actually stored by the standby GTM before the standby GTM restarts, and updates the GTIDs stored by itself according to the GTIDs from the primary GTM. It should be noted that, in the practical application, when restart due to an exception occurs to the primary GTM and the standby GTM at the same time, the standby GTM can receive the GTIDs synchronized from the primary GTM and store them on the memory of the standby GTM, instead of performing the operation of recovering and storing the GTIDs.

A system for synchronizing a global transaction identification (GTID) is also provided by an embodiment of the present invention. The system includes a primary GTM and a standby GTM. Herein the primary GTM is configured to: receive two or more GTID processing messages, herein a GTID processing message includes at least one of a GTID application message or a GTID release message, the GTID application message is used for requesting to generate a first GTID, and the GTID release message is used for requesting to delete a second GTID; perform batch processing on GTIDs stored in the primary GTM according to the two or more GTID processing messages and generate an incremental file for describing the batch processing; and synchronize content of the incremental file to a standby GTM. The standby GTM is configured to: receive the content of the incremental file synchronized by the primary GTM and perform the batch processing on GTIDs which are stored in the standby GTM and corresponding to the GTIDs in the primary GTM according to the content of the incremental file.

In the embodiments of the present invention, the operations performed by the primary GTM correspond to the operations performed by the global transaction identification (GTID) synchronization device which is applied to the primary GTM. And details will not be described herein again.

In the embodiments of the present invention, the operations performed by the standby GTM correspond to the operations performed by the global transaction identification (GTID) synchronization device which is applied to the standby GTM. And details will not be described herein again.

It is to be noted that each module above may be implemented by software or hardware. For the later, it may be implemented by the following ways, but is not limited to: the above modules all are positioned in a same processor; alternatively, the above modules are respectively positioned in a plurality of processors.

A computer storage medium is also provided in the embodiment of the present invention. In this embodiment, the computer storage medium can be configured to store program codes for executing the following operations.

S1: a primary global transaction manager (GTM) receives two or more GTID processing messages. Herein a GTID processing message comprises at least one of a GTID application message or a GTID release message, the GTID application message is used for requesting to generate a first GTID, and the GTID release message is used for requesting to delete a second GTID.

S2: the primary GTM performs batch processing on GTIDs stored in the primary GTM according to the two or more GTID processing messages and generates an incremental file for describing the batch processing.

S3: the primary GTM synchronizes content of the incremental file to a standby GTM. Herein the content of the incremental file is used to instruct the standby GTM to perform the batch processing on GTIDs which are stored in the standby GTM and corresponding to the GTIDs in the primary GTM.

In an embodiment of the present invention, the computer storage medium can be further configured to store program codes for executing the following operations.

S1: a standby global transaction manager (GTM) receives content of an incremental file synchronized by a primary GTM, herein the content of the incremental file is used for describing batch processing performed on GTIDs stored in the primary GTM by the primary GTM according to two or more GTID processing messages. Herein a GTID processing message includes at least one of a GTID application message or a GTID release message, the GTID application message is used for requesting the primary GTM to generate a first GTID, and the GTID release message is used for requesting the primary GTM to delete a second GTID.

S2: the standby GTM performs the batch processing on GTIDs which are stored in the standby GTM and corresponding to the GTIDs in the primary GTM according to the content of the incremental file.

In an embodiment of the present invention, the computer storage medium may include, but is not limited to, a USB flash drive, a Read-Only Memory (ROM), a Random Access Memory (RAM), a portable hard drive or a variety of media that can store program code, such as a disk or a disc.

In an embodiment of the present invention, the processor executes the above operations according to the program codes stored in the storage medium.

For an example of the embodiment of the present invention, reference may be made to the examples described in the foregoing embodiments and the optional embodiments, and details are not described herein again.

Apparently, those skilled in the art should understand that various modules or operations of the invention described above may be implemented by general-purpose computing devices that may be centralized on a single computing device or distributed over a network consisting of a plurality of computing devices. Operationally, the modules or operations may be implemented by program codes executable by the computing devices such that they may be stored in storage devices and executed by the computing devices. Moreover, in some cases, the operations shown or described may be performed in an order different from that shown herein. Or the modules or operations can be made separately into individual integrated circuit modules, or some of them can be made into a single integrated circuit element. Thus, the invention is not limited to any particular combination of hardware and software.

The above description is only preferred embodiments of the invention and is not intended to limit the invention. Those skilled in the art should understand that the invention may have various changes and modifications. Any modification, equivalent substitution, improvement and the like made within the spirit and principle of the invention should be included in the protection scope of the invention.

### INDUSTRIAL APPLICABILITY

According to the embodiment of the present invention, the data storage is performed in a manner of combining the primary and standby GTMs, which ensures that the data storage can be switched to another GTM quickly once a single GTM is abnormal, therefore, the accuracy of the GTID is ensured. Moreover, when the processing is performed on GTIDs, a manner of instructing the standby GTM in batches to process the GTIDs is adopted, which can minimize the delay and improve the concurrency capability while the reliability is ensured, and the efficiency of processing the GTID is greatly improved. Therefore, the problems that, by the recording method of the GTID in the related art, the disk is easily damaged, the interruption period of the system is long, and the normal operation of the service is affected are solved.

## Claims

1. A method for synchronizing a global transaction identification (GTID), comprising:
receiving, by a primary global transaction manager (GTM), two or more GTID processing messages, wherein the GTID processing message comprises at least one of a GTID application message or a GTID release message, the GTID application message is used for requesting to generate a first GTID, and the GTID release message is used for requesting to delete a second GTID;
performing, by the primary GTM, a batch processing on GTIDs stored in the primary GTM according to the two or more GTID processing messages and generating, by the primary GTM, an incremental file for describing the batch processing; and
synchronizing, by the primary GTM, content of the incremental file to a standby GTM, wherein the content of the incremental file is used to instruct the standby GTM to perform a batch processing on GTIDs which are stored in the standby GTM and corresponding to the GTIDs in the primary GTM.

2. The method according to claim 1, wherein generating, by the primary GTM, the incremental file for describing the batch processing comprises:
generating, by the primary GTM, the incremental file in batches in a sequential write manner in an order of performing the batch processing on the GTIDs stored in the primary GTM.

3. The method according to claim 1, further comprising: after synchronizing, by the primary GTM, the content of the incremental file to the standby GTM,
determining, by the primary GTM, whether an incremental synchronization response message returned by the standby GTM after the standby GTM performs the batch processing is received within a predetermined time,
wherein the method further comprises at least one of the following:
when the primary GTM determines that the incremental synchronization response message is received within the predetermined time, returning, by the primary GTM, according to the incremental synchronization response message, a processing response to a transmitting end for transmitting the GTID processing message; or
when the primary GTM determines that the incremental synchronization response message is not received within the predetermined time, synchronizing, by the primary GTM, all the GTIDs, which are processed by the primary GTM in batches and then stored in the primary GTM, to the standby GTM.

4. The method according to claim 1, further comprising: after synchronizing, by the primary GTM, the content of the incremental file to the standby GTM,
storing, by the primary GTM, all GTIDs, which are processed by the primary GTM in batches and then stored in the primary GTM, into a first disk; and
deleting, by the primary GTM, the incremental file.

5. The method according to claim 1, further comprising:
after the primary GTM is restarted due to an exception, reading, by the primary GTM, a first full file and a first latest incremental file which are stored in the primary GTM, wherein the first full file is used for describing all GTIDs stored in the primary GTM at a predetermined moment, and the first latest incremental file is used for describing change information of the GTIDs stored in the primary GTM;
wherein the method further comprises at least one of the following:
when the primary GTM determines that a time at which the first latest incremental file is generated is later than a time at which the first full file is generated, recovering and storing, by the primary GTM, according to the first full file and the first latest incremental file, GTIDs which are actually stored in the primary GTM before the primary GTM restarts; or
when the primary GTM determines that the time at which the first latest incremental file is generated is earlier than the time at which the first full file is generated, recovering and storing, by the primary GTM, according to the first full file, the GTIDs which are actually stored in the primary GTM before the primary GTM restarts.

6. The method according to claim 5, further comprising: when restart due to an exception occurs to the primary GTM and the standby GTM at the same time, after the primary GTM recovers and stores the GTIDs which are actually stored in the primary GTM before the primary GTM restarts,
synchronizing, by the primary GTM, the recovered and stored GTIDs to the standby GTM.

7. A method for synchronizing a global transaction identification (GTID), comprising
receiving, by a standby global transaction manager (GTM), content of an incremental file synchronized by a primary GTM, wherein the content of the incremental file is used for describing a batch processing performed on GTIDs stored in the primary GTM by the primary GTM according to two or more received GTID processing messages, wherein the GTID processing message comprises at least one of a GTID application message or a GTID release message, the GTID application message is used for requesting the primary GTM to generate a first GTID, and the GTID release message is used for requesting the primary GTM to delete a second GTID; and
performing, by the standby GTM, a batch processing on GTIDs which are stored in the standby GTM and corresponding to the GTIDs in the primary GTM according to the content of the incremental file.

8. The method according to claim 7, further comprising: after performing, by the standby GTM, the batch processing on the GTIDs which are stored in the standby GTM and corresponding to the GTIDs in the primary GTM according to the content of the incremental file,
returning, by the standby GTM, an incremental synchronization response message to the primary GTM within a predetermined time when the standby GTM determines that the batch processing is successful.

9. The method according to claim 7, further comprising: after performing, by the standby GTM, the batch processing on the GTIDs which are stored in the standby GTM and corresponding to the GTIDs in the primary GTM according to the content of the incremental file,
receiving, by the standby GTM, all GTIDs, which are stored in the primary GTM after the batch processing is performed, from the primary GTM; and
updating, by the standby GTM, GTIDs stored in the standby GTM according to the GTIDs received from the primary GTM.

10. The method according to claim 7, further comprising: after performing, by the standby GTM, the batch processing on the GTIDs which are stored in the standby GTM and corresponding to the GTIDs in the primary GTM according to the content of the incremental file,
storing, by the standby GTM, all the GTIDs, which are processed by the standby GTM in batches and then stored in the standby GTM, into a second disk; and
deleting, by the standby GTM, the incremental file.

11. The method according to claim 7, further comprising:
reading, by the standby GTM, a second full file and a second latest incremental file which are stored in the standby GTM after the standby GTM is restarted due to an exception, wherein the second full file is used for describing all GTIDs stored in the standby GTM at a predetermined moment, and the second latest incremental file is used for describing change information of the GTIDs stored in the standby GTM;
wherein the method further comprises at least one of the following:
when the standby GTM determines that a time at which the second latest incremental file is generated is later than a time at which the second full file is generated, recovering and storing, by the standby GTM, according to the second full file and the second latest incremental file, GTIDs which are actually stored in the standby GTM before the standby GTM restarts; or
when the standby GTM determines that the time at which the second latest incremental file is generated is earlier than the time at which the second full file is generated, recovering and storing, by the standby GTM, according to the second full file, the GTIDs which are actually stored in the standby GTM before the standby GTM restarts.

12. The method according to claim 11, further comprising: when restart due to an exception occurs to the primary GTM and the standby GTM at the same time, after the standby GTM recovers and stores the GTIDs which are actually stored in the standby GTM before the standby GTM restarts,
receiving, by the standby GTM, recovered and stored GTIDs from the primary GTM;
comparing, by the standby GTM, the recovered and stored GTIDs received from the primary GTM with the recovered and stored GTIDs in the standby GTM; and
updating, by the standby GTM, the recovered and stored GTIDs in the standby GTM using the recovered and stored GTIDs received from the primary GTM when the standby GTM determines that the recovered and stored GTIDs received from the primary GTM are the latest stored GTIDs according to a comparison result.

13. A device for synchronizing a global transaction identification (GTID), comprising:
a first receiving module, which is configured to receive two or more GTID processing messages, wherein the GTID processing message comprises at least one of a GTID application message or a GTID release message, the GTID application message is used for requesting to generate a first GTID, and the GTID release message is used for requesting to delete a second GTID;
a first processing module, which is configured to perform a batch processing on GTIDs stored in a primary global transaction manager (GTM) according to the two or more GTID processing messages and generate an incremental file for describing the batch processing; and
a synchronization module, which is configured to synchronize content of the incremental file to a standby GTM, wherein the content of the incremental file is used to instruct the standby GTM to perform a batch processing on GTIDs which are stored in the standby GTM and corresponding to the GTIDs in the primary GTM.

14. The device according to claim 13, further comprising:
a determining module, which is configured to determine whether an incremental synchronization response message returned by the standby GTM after the standby GTM performs the batch processing is received within a predetermined time;
a processing module, which is configured to perform at least one of the following:
returning, according to the incremental synchronization response message, a processing response to a transmitting end for transmitting the GTID processing message when the determining module determines that the incremental synchronization response message is received by the primary GTM within the predetermined time; or
synchronizing all the GTIDs, which are stored in the primary GTM after the batch processing is performed, to the standby GTM when the determining module determines that the incremental synchronization response message is not received by the primary GTM within the predetermined time.

15. The device according to claim 13, further comprising:
a first storage module, which is configured to store the GTIDs, which are processed in batches and then stored in the primary GTM, into a first disk after the content of the incremental file is synchronized to the standby GTM; and
a deleting module, which is configured to delete the incremental file.

16. A device for synchronizing a global transaction identification (GTID), comprising:
a second receiving module, which is configured to receive content of an incremental file synchronized by a primary global transaction manager (GTM), wherein the content of the incremental file is used for describing a batch processing performed on GTIDs stored in the primary GTM by the primary GTM according to two or more received GTID processing messages, wherein the GTID processing message comprises at least one of a GTID application message or a GTID release message, the GTID application message is used for request the primary GTM to generate a first GTID, and the GTID release message is used for request the primary GTM to delete a second GTID; and
a second processing module, which is configured to perform a batch processing on GTIDs which are stored in the standby GTM and corresponding to the GTIDs in the primary GTM according to the content of the incremental file.

17. The device according to claim 16, further comprising:
an updating module, which is configured to receive all GTIDs, which are stored in the primary GTM after the batch processing is performed, from the primary GTM after the batch processing is performed on the GTIDs which are stored in the standby GTM and corresponding to the GTIDs in the primary GTM according to the content of the incremental file, and update GTIDs stored in the standby GTM according to the GTIDs received from the primary GTM.

18. The device according to claim 16, further comprising:
a second reading and processing module, which is configured to read a second full file and a second latest incremental file which are stored in the standby GTM after the standby GTM is restarted due to an exception, wherein the second full file is used for describing all GTIDs stored in the standby GTM at a predetermined moment, and the second latest incremental file is used for describing change information of the GTIDs stored in the standby GTM;
wherein the second reading and processing module is further configured to perform at least one of the following:
recovering and storing GTIDs which are actually stored in the standby GTM before the standby GTM restarts according to the second full file and the second latest incremental file when it is determined that a time at which the second latest incremental file is generated is later than a time at which the second full file is generated; or
recovering and storing the GTIDs which are actually stored by the standby GTM before the standby GTM restarts according to the second full file when it is determined that the time at which the second latest incremental file is generated is earlier than the time at which the second full file is generated.

19. A system for synchronizing a global transaction identification (GTID), comprising: a primary global transaction manager (GTM) and a standby GTM, wherein
the primary GTM is configured to: receive two or more GTID processing messages, wherein the GTID processing message comprises at least one of a GTID application message or a GTID release message, the GTID application message is used for requesting to generate a first GTID, and the GTID release message is used for requesting to delete a second GTID; perform a batch processing on GTIDs stored in a primary GTM according to the two or more GTID processing messages; generate an incremental file for describing the batch processing; and synchronize content of the incremental file to a standby GTM; and
the standby GTM is configured to: receive the content of the incremental file synchronized by the primary GTM and perform a batch processing on GTIDs which are stored in the standby GTM and corresponding to the GTIDs in the primary GTM according to the content of the incremental file.

20. A computer storage medium having stored thereon program codes for executing the method according to any one of claims 1 to 6 and the method according to any one of claims 7 to 12.
